# EUROPEAN PATENT APPLICATION

(11) **EP 4 835 283 A1**
(43) Date of publication of application: **04.11.2026**
(21) Application number: 26162675.8
(22) Date of filing: 05.03.2026
(51) Int. Cl.: F02D 41/14, B60W 20/00, F01N 3/20, F02B 63/04, F02D 41/02, F02N 19/00, H02J 7/14, H02K 7/10, H02K 7/18, H02P 9/06, H02P 29/00, F02D 41/08

(54) **PRIME MOVER SYSTEM PROVIDED WITH AT LEAST A VARIABLE SPEED CLUTCH BETWEEN PRIME MOVER AND ALTERNATOR AND METHOD OF CONTROLLING SUCH A SYSTEM**

(30) Priority: 14.03.2025 US 202519080326
(71) Applicant: Cummins Inc., Columbus, IN 47201 (US)
(72) Inventor: KOLHOUSE, Steven, Columbus, 47201 (US); BELLINGER, Steven, Columbus, 47201 (US); HAYS, Michael, Columbus, 47203 (US); MADHAVAN, Sriram, Greenwood, 46143 (US); BEINBORN, Aaron, Columbus, 47203 (US)
(74) Representative: Cleveland Scott York

(57) **Abstract**

A prime mover system includes a prime mover with an output shaft, at least one variable speed clutch, and at least one alternator engageable and disengageable to the output shaft with the variable speed clutch. The variable speed clutch can be controlled to vary a speed of the at least one alternator independently of varying a speed of the output shaft. The prime mover system includes a controller in operative communication with the prime mover and the variable speed clutch to control the selective engagement and disengagement of the at least one alternator to the output shaft and the speed of the at least one alternator.

## Description

### TECHNICAL FIELD

The present application relates generally to prime mover systems including variable speed clutches for alternators as well as methods for controlling such systems.

### BACKGROUND

Prime mover systems, such as internal combustion engines, hybrid internal combustion engine systems including electric motors, plug-in hybrid electric systems, and automotive applications thereof, require electrical power for ancillary loads and accessories. For example, many prime mover systems require batteries and electrical equipment such as heaters for exhaust gas flow and/or emissions treatment equipment. Electrification of prime mover system powertrain components accessories such as axles, propulsion motors, compressors, fans, pumps, electric accessories and other accessories puts an increasing demand on electrical systems associated therewith.

Prime mover systems typically employ an alternator that is driven by an output shaft of the engine to generate electrical energy that is stored in batteries. Such alternators remain continuously connected to the output shaft of the engine during starting, operation, and shutdown of the engine. In addition, such alternators are driven at speeds that are not controllable independently of engine speed or sufficiently controllable in response to operating conditions. Present approaches to utilizing alternators in prime mover systems therefore suffer from a number of drawbacks and disadvantages. There remains a significant unmet need for the unique apparatuses, methods and systems disclosed herein.

### DISCLOSURE OF ILLUSTRATIVE EMBODIMENTS

For the purposes of clearly, concisely and exactly describing illustrative embodiments of the present disclosure, the manner and process of making and using the same, and to enable the practice, making and use of the same, reference will now be made to certain exemplary embodiments, including those illustrated in the figures, and specific language will be used to describe the same. It shall nevertheless be understood that no limitation of the scope of the invention is thereby created, and that the invention includes and protects such alterations, modifications, and further applications of the exemplary embodiments as would occur to one skilled in the art.

### SUMMARY

One embodiment is a unique prime mover system with at least one alternator that can be clutched in variable speed engagement with an output shaft of the prime mover for rotational speed change with at least one variable speed clutch, and/or de-clutched by the at least one variable speed clutch for disengagement with the output shaft of the prime mover. In certain forms the prime mover system includes two alternators that can be clutched in variable speed engagement with the output shaft of the prime mover with two variable speed clutched and de-clutched for disengagement with the output shaft of the prime mover.

Other embodiments include unique methods of controlling the clutched engagement, disengagement, and/or rotational speed change of at least one alternator with an output shaft of a prime mover. Yet other embodiments include unique electronic control systems configured to control the clutched engagement, disengagement, and/or rotational speed change of at least one alternator with an output shaft of a prime mover. In certain forms the method controls a multi-alternator drive system. Further embodiments, forms, objects, features, advantages, aspects, and benefits shall become apparent from the following description and drawings.

### BRIEF DESCRIPTION OF THE DRAWINGS

FIG. 1 is a schematic view of an embodiment of a prime mover system include a variable speed clutch and an alternator according to an embodiment of the present disclosure.
FIG. 2 is a schematic view of an embodiment of a prime mover system include a variable speed clutch and an alternator according to another embodiment of the present disclosure.
FIG. 3 is a schematic view of an embodiment of a prime mover system include two variable speed clutches and two alternators according to an embodiment of the present disclosure.
FIG. 4 is a schematic view of another embodiment prime mover system that includes a variable speed clutch and alternator according to an embodiment of the present disclosure.

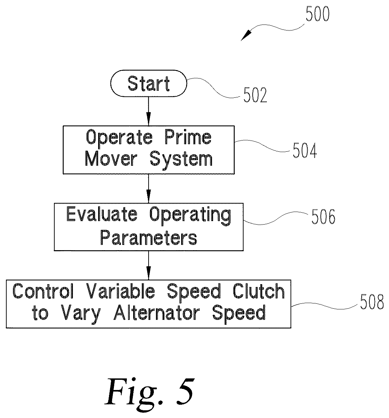

FIG. 5 is a flow diagram illustrating exemplary control process which may be used in connection with any the apparatuses and systems disclosed herein.

### DETAILED DESCRIPTION OF ILLUSTRATIVE EMBODIMENTS

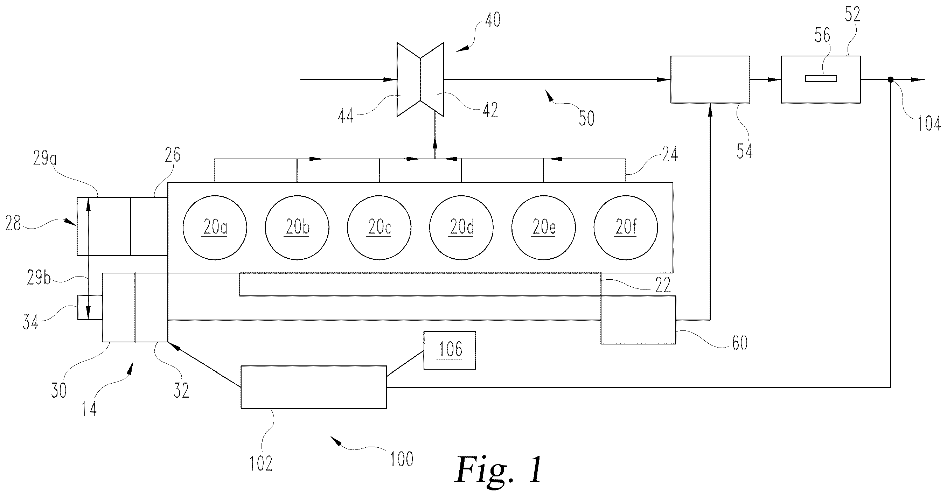

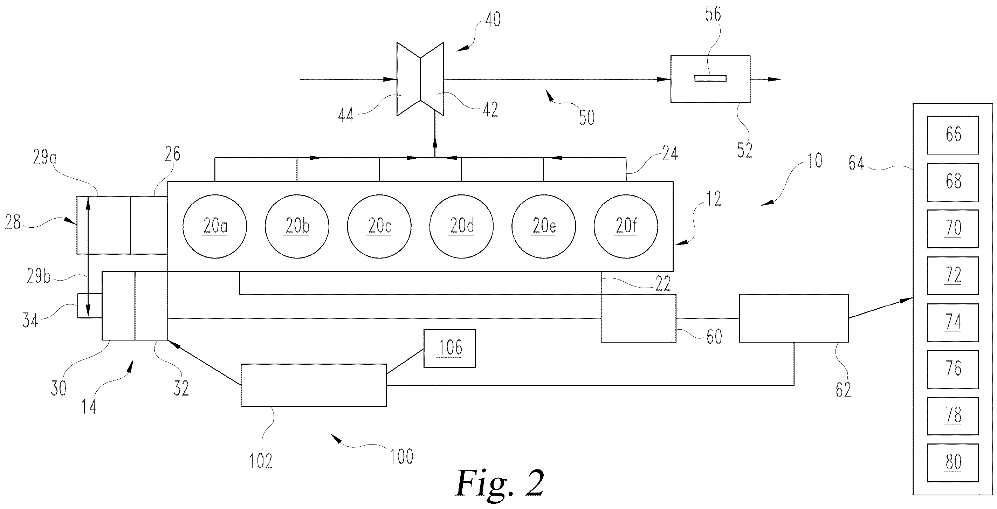

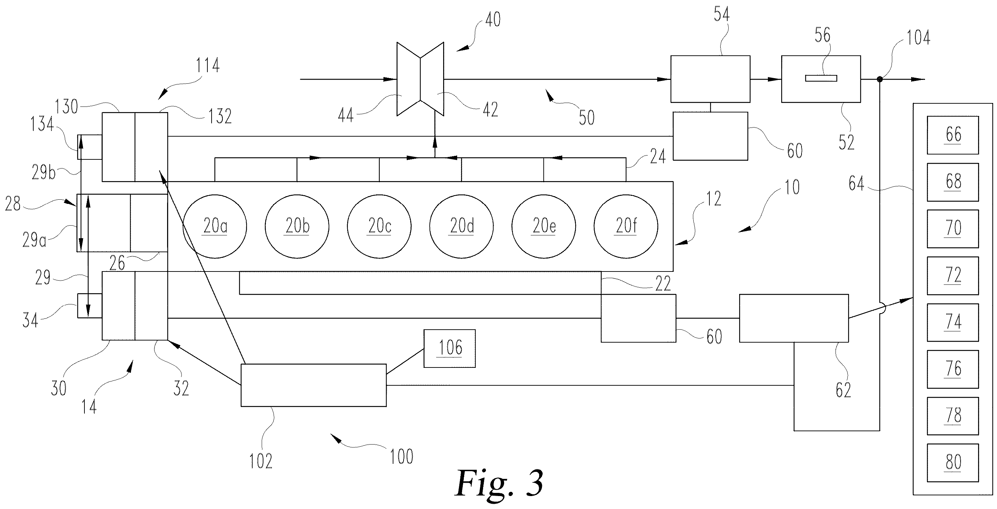

With reference to FIGs. 1-3 there is illustrated an exemplary prime mover system 10 including a prime mover 12 and a clutched alternator assembly 14. In the illustrated embodiment, the prime mover 12 is provided as an internal combustion engine (ICE) system. It shall be appreciated that in certain embodiments the prime mover system 10 may be provided in other forms such as a plug-in hybrid system, hybrid electric-ICE system, a hybrid pneumatic-ICE system or an electrical machine drive system. In the illustrated embodiments, clutched alternator assembly 14 is provided as an electrical power generation system in a particular single clutched alternator (FIGs. 1-2) or dual alternator form (FIG. 3), but it shall be appreciated that systems including different numbers and configurations of alternators utilizing the features disclosed herein are also contemplated in other embodiments.

Prime mover 12 of the illustrated embodiment includes a plurality of cylinders 20a, 20b, 20c, 20d, 20e, 20f (collectively and individually referred to herein as cylinder(s) 20) that are in fluid communication with an intake manifold 22 and an exhaust manifold 24. Combustion of fuel with an intake charge received from intake manifold 22 produces an exhaust gas flow that is received by exhaust manifold 24. The combustion of the air-fuel mixture displaces pistons (not shown) in cylinders 20 to rotate a crank or output shaft 26. Output shaft 26 is connected to clutched alternator assembly 14 (and/or clutched alternator assembly 114) with a drive system 28, such as a drive pulley 29a and belt(s) 29b, a gear train, or other arrangement.

Clutched alternator assembly 14 includes a variable speed clutch 30 that is selectably engageable to an alternator 32. Variable speed clutch 30 includes an input shaft 34 that is coupled to output shaft 26 with drive system 28. In the embodiments of FIGs. 1-2, one clutched alternator assembly 14 is shown. FIG. 3 shows a dual arrangement in which a first clutched alternator assembly 14 is coupled to output shaft 26 with a first belt 29b of drive system 28 and a second clutched alternator assembly 114 including a second variable speed clutch 130 with second input shaft 134 coupled to output shaft 26 with a second belt 29b of drive system 28. Second variable speed clutch 130 drives a second alternator 132 when drivably engaged to second alternator 132.

Variable speed clutches 30, 130 allow for the controlled adjustment of power transmission from output shaft 26 to alternators 32, 132 by changing the amount of engagement between the driving and driven components within the variable speed clutches 30, 130. Variable speed clutches 30, 130 enable the speed of the connected alternator 32, 132 to be varied independently of and/or without a corresponding change in the speed of output shaft 26 in order to respond to one or more operating parameters of prime mover system 10. Various mechanisms for enabling the change in speed of the variable speed clutches 30, 130 are contemplated, including adjustable pulley diameters or fluid coupling that vary the viscosity and/or clamping force between components within the variable speed clutch 30, 130, one of which is to input shaft 34, 134 and the other of which is connected to alternator 32, 132. The variable speed clutches 30, 130 allow the speeds of alternators 32, 132 to be dynamically adjusted to respond to one or more operating parameters of prime mover system 10, as discussed further below.

Exhaust gas flow from exhaust manifold 24 is provided a turbine 42 of turbocharger 40. Intake air flow is compressed by compressor 44 of turbocharger 40 and provided to intake manifold 22. Turbocharger 40 may include a wastegate, a variable inlet, or other structure to control exhaust gas flow. In other embodiments, multiple turbochargers are included to provide high pressure and low pressure turbocharging stages that compress the intake flow. Still other embodiments contemplate arrangements of prime mover system 10 without a turbocharger.

The exhaust gas flow is provided from turbine 42 to an aftertreatment system 52 of exhaust system 50. Exhaust system 50 can include aftertreatment system 52 downstream of an electric heater 54 that is operable to heat the exhaust gas flow to a desired operating temperature for effective operation of aftertreatment system 52. Aftertreatment system 52 can include one or more regeneratable components 56, such as oxidation devices (DOC), particulate removing devices (DPF, CDPF), and/or constituent absorbers or reducers (SCR, AMOX, LNT). Electric heater 54 can also heat the exhaust gas flow in response to a regeneration event for a regeneratable component 56 of aftertreatment system 52.

Prime mover further includes power electronics 60 connected to first alternator 32 and/or second alternator 132. Power electronics 60 can provide electric power to electric heater 54 and/or to energy storage system 62. Energy storage system 62 can include one or more batteries or pack of batteries that provide electrical power to one or more electrically powered accessories 64 of prime mover system 10. Examples of such electrically powered accessories 64 include an electric propulsion motor 66, an electric axle 68, an electric or belt-driven heating-venting-air conditioning system 70, lights 72, an air compressor 74, an auxiliary power unit 76, an electric pump 78, an electric motor 80, and other accessories 64 which have variable load or duty cycles or are needed only under certain operating conditions of prime mover system 10.

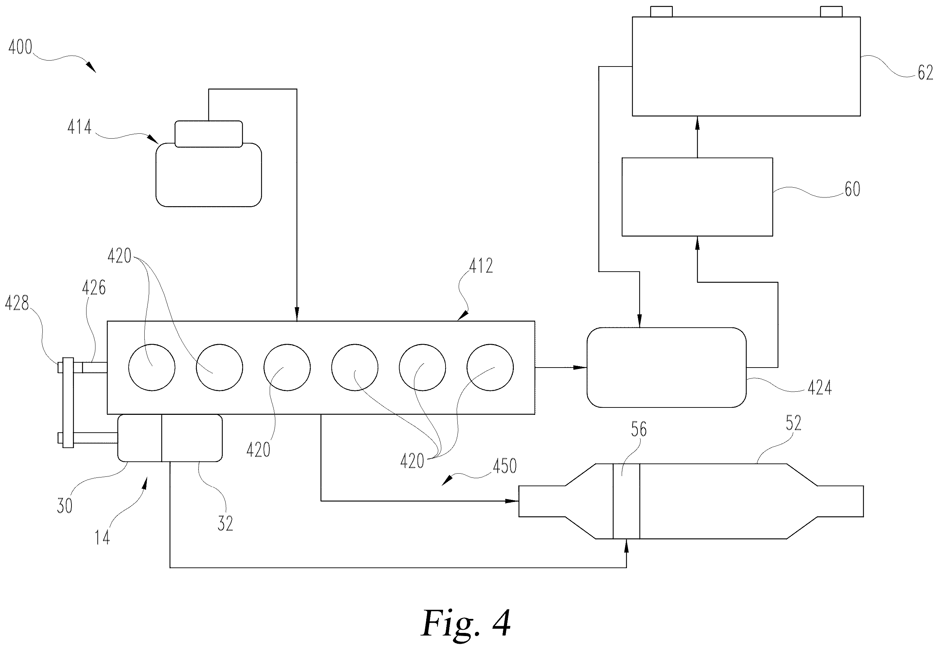

FIG. 4 shows another embodiment of prime mover system 10, designated as prime mover system 400. Prime mover system 400 includes a prime mover 412 having cylinders 420 fueled with fuel from a fuel source 414. Exhaust gas from combustion in cylinders 420 is provided to exhaust system 450, which can include aftertreatment system 52 and electric heater 56 such as discussed above for prime mover system 10. Electric heater 56 is directly connected to first alternator 32. First alternator 32 is selectively engageable to an output shaft 426 of prime mover 412 via first variable speed clutch 30 and drive system 428. In this arrangement, the speed of first alternator 32 is controlled at two or more different speeds independently of the speed of output shaft 426 via selective engagement with variable speed clutch 430 to solely provide electric power to electric heater 56 when an increase in temperature is requested.

Prime mover system 400 may further include a motor-generator 424 that can assist prime mover 412 in providing output power simultaneously, or in solely providing output power at least during certain operating conditions. Motor-generator 424 can also generate electrical power to power electronics 60 to charge energy storage system 62, which can store electric energy to power motor-generator 424 to provide propulsion. In another embodiment of prime mover system 400, a second alternator and variable speed clutch is provided that is selectively engageable to output shaft 426 to charge energy storage system 62 of prime mover system 400.

Electric heater 54, energy storage system 62, accessories 64, and one or more sensors 104, 106 of prime mover system 10, 400 are in electrical communication with an electronic control system (ECS) 100, such as shown with prime mover system 10. ECS 100 is also in operative communication with prime mover 12, 412, clutched alternator assembly 14, and clutched alternator assembly 114 (when provided). ECS 100 is configured to receive information from and provide commands to a variety of controlled components and systems including those described in connection with FIGs. 1-4. ECS 100 is one example of an electronic control system component which may be utilized in controlling prime mover system 10, 400, prime mover 12, 412, clutched alternator assembly 14, and clutched alternator assembly 114. It shall be appreciated that ECS 100 may include one or more electronic control units (ECU) 102, which may be a unitary electronic unit or a combination of multiple electronic control units and may operate in conjunction with communication links or busses, and a variety of sensors and other electronic devices.

In certain embodiments of the systems disclosed herein, ECS 100 and/or ECU 102 is structured to perform certain operations to control operations of prime mover 12, 412 and variable speed clutches 30, 130 to engage, disengage, and vary the speed of alternators 30, 32, respectively, to provide the desired operational outcomes. ECU 102 may be in communication with each of the sensors and actuators disclosed herein in a number of manners including, for example, through direct communication, communication over a controller area network, communication over a datalink, and/or through communication with other controllers or portions of the processing subsystem that provide sensor and/or actuator information to ECS 100 and/or ECU 102.

Example and non-limiting implementation elements for ECS system 100 include sensors, such as temperature sensor 104 in exhaust system 50 or other sensors 106 that can provide values for operating parameters associated with prime mover 12,412, aftertreatment system 52, energy storage system 62, a temperature condition of prime mover 12, 412 or other component, NOx or other emissions output from prime mover 12, 412 and/or aftertreatment system 52, regeneration events for regeneratable component 56, vehicle braking, prime mover braking, electric load demand from one or more accessories 64, charging or plugged-in status of energy storage system 62, external conditions such as look-ahead route conditions, and other parameters.

The sensors can provide any value determined herein, and provide any value that is a precursor to a value determined herein, via datalink and/or network hardware including communication chips, oscillating crystals, communication links, cables, twisted pair wiring, coaxial wiring, shielded wiring, transmitters, receivers, and/or transceivers, logic circuits, hard-wired logic circuits, reconfigurable logic circuits in a particular non-transient state configured according to the ECU 102 specification. ECU 102 may communicate with any actuator including at least an electrical, hydraulic, or pneumatic actuator, a solenoid, an op-amp, analog control elements (springs, filters, integrators, adders, dividers, gain elements), and/or digital control elements.

Certain operations described herein include operations to interpret and/or to determine one or more parameters. Interpreting or determining, as utilized herein, includes receiving values by any method known in the art, including at least receiving values from a datalink or network communication, receiving an electronic signal (e.g. a voltage, frequency, current, or PWM signal) indicative of the value, receiving a computer generated parameter indicative of the value, reading the value from a memory location on a non-transient computer readable storage medium, receiving the value as a run-time parameter by any means known in the art, and/or by receiving a value by which the interpreted parameter can be calculated, and/or by referencing a default value that is interpreted to be the parameter value.

In an embodiment, ECS 100 is in operative communication with prime mover 12, 412 and first variable speed clutch 30. First alternator 32 is selectively engageable to output shaft 26, 426 by selective engagement with first variable speed clutch 30 to vary the speed of first alternator 32 between two or more speed and/or to disengage first alternator 32 from output shaft 26, 426. First variable speed clutch 30 is configured to change a speed of first alternator 32 while engaged to first alternator 32 independently of and/or without requiring a speed change of output shaft 26, 426 of prime mover 12, 412. ECS 100 is configured to control variable speed clutch 30 to selectively engage and disengage output shaft 26, 426 from first alternator 32 and/or to vary the speed of first alternator 32.

In an embodiment, ECS 100 is in operative communication with the second variable speed clutch 130. Second alternator 132 is selectively engageable to output shaft 26, 426 with variable speed clutch 130 to vary the speed of second alternator 132 between two or more speed and/or to disengage second alternator 132 from output shaft 26, 426. Variable speed clutch 130 is configured to change a speed of second alternator 132 while engaged to second alternator 132 independently of and/or without requiring a speed change of output shaft 26, 426. ECS 100 is configured to control the second variable speed clutch 130 to selective output shaft 26, 426 from second alternator 132 to vary the speed of second alternator 132.

In an embodiment, variable speed clutches 30, 130 include a plurality of speed settings from which to select while variable speed clutches 30, 130 are engaged to the corresponding alternators 32, 132. In an embodiment, a first speed setting corresponds to a nominal or normal speed setting for variable speed clutch 30, 130 at which the engaged alternator 32, 132 is rotated. Speed settings are available for variable speed clutches 30, 130 that are greater than the nominal speed setting in order to dynamically increase the speed of the engaged alternator 32, 132 from its nominal speed independently or and/or without requiring a change in speed of output shaft 26, 426. Speed settings for variable speed clutches 30, 130 may also be available that are lower than the nominal speed setting in order to dynamically decrease the speed of the engaged alternator 32, 132 without requiring a change in speed of output shaft 26, 426.

In an embodiment, power electronics 60 connect first alternator 32 and/or second alternator 132 to electric heater 54 and/or to energy storage system 62. ECS 100 is configured to control first variable speed clutch 30 to increase a speed of first alternator 32 and/or to control second variable speed clutch 130 to increase a speed of second alternator 132 to generate electrical power for electric heater 54 in response to a temperature of aftertreatment system 52. ECS 100 is configured to control first variable speed clutch 30 to increase or decrease a speed of first alternator 32 and/or to control second variable speed clutch 130 to increase or decrease a speed of second alternator 132 to generate electrical power for energy storage system 62 in response to a state-of-charge threshold of the energy storage system 62.

Referring to FIG. 4, a method 500 for operating prime mover system 10, 400 according to an embodiment of the present disclosure is provided. Method 500 may be implemented in and executed by ECS 100 and/or ECU 102 described above in connection with FIGs. 1-4 or in a variety of other electronic control systems and devices. In one form, method 500 may be applied to other forms of clutched alternator assemblies and prime mover system with certain variations exemplary aspects of which are described below.

Method 500 starts at operation 502 and proceeds to operation 504 operate prime mover system 10, 400. In an embodiment, prime mover system 10, 100 includes prime mover 12, 412, output shaft 26, 426, aftertreatment system 52, electric energy storage system 62, at least one alternator 32, 132, and at least one variable speed clutch 30, 130 that engages the at least one alternator 32, 132 to output shaft 26, 426.

Method 500 continues from operation 504 at operation 506 to evaluate an operating parameter of the prime mover system 10, 400. Method 500 continues from operation 506 at operation 508 to control the at least one variable speed clutch 30, 130 to vary a speed of the at least one alternator 32, 132 in response to the operating parameter of prime mover system 10, 400.

In an embodiment, the operating parameter evaluated at operation 506 is a temperature condition of at least one of the prime mover and the aftertreatment system being less than a temperature threshold. The temperature condition of prime mover 12, 412 could be, for example, a coolant temperature, an oil temperature, a component temperature, or other temperature. The temperature condition of aftertreatment system 52 could be, for example, provided by a temperature sensor 110 that indicates an exhaust gas temperature, a temperature of one or more components of aftertreatment system 52, a turbine outlet temperature, or other temperature downstream of prime mover 12, 412.

Operation 508 can include controlling the at least one variable speed clutch 30, 130 to increase the speed of the at least one alternator 32, 132 to increase a temperature of prime mover 12, 412 and/or aftertreatment system 52. Increasing the speed of the at least one alternator 32, 132 increases the load on prime mover 12, 412 through output shaft 26, 426, which will increase the temperature of prime mover 12, 412 and/or the exhaust gas produced by prime mover 12, 412. Additionally or alternatively, increasing the speed of the at least one alternator 32, 132 allows for increased electrical power to be used by electric heater 54 to heat the exhaust gas from prime mover 12, 412 and increase the temperature of the aftertreatment system 52.

In an embodiment of method 500, the operating parameter evaluated at operation 506 is a NOx output from prime mover 12, 412 and/or aftertreatment system 52. In response to the NOx output being greater than a NOx threshold, operation 408 includes controlling the at least one variable speed clutch 30, 130 to increase the speed of the at least one alternator 32, 132 to decrease the NOx output from prime mover 12, 412 and/or aftertreatment system 52. The NOx output can be measured by, for example, an engine-out NOx sensor, system out NOx sensor, and/or an estimate of NOx from one or more other operating parameters.

In an embodiment of method 500, the operating parameter evaluated at operation 506 is a regeneration event for regeneratable component 56 of aftertreatment system 52. Operation 508 includes controlling the at least one variable speed clutch 30, 130 to increase the speed of the at least one alternator 32, 132 for the regeneration event by increasing the temperature of the exhaust gas output from prime mover 12, 412. The regeneration event can be, for example, an active regeneration event initiated in response to accumulated soot or other particles on regeneratable component 56, or a passive event that occurs periodically to elevate exhaust temperatures during operation of prime mover system 10, 400.

In an embodiment of method 500, the operating parameter evaluated at operation 506 is a deceleration event for a vehicle being propelled by prime mover 12, 412. Operation 508 includes controlling the at least one variable speed clutch 30, 130 to increase the speed of the at least one alternator 32, 132 to assist in deceleration of the vehicle. The deceleration event can be detected by, for example, the operator releasing an accelerator pedal, depressing a brake pedal, or other vehicle deceleration request from prime mover system 10, 400.

In an embodiment of method 500, the operating parameter evaluated at operation 406 is a braking event for prime mover 12, 412. Operation 508 includes controlling the at least one variable speed clutch 30, 130 to increase the speed of the at least one alternator 32, 132 to assist in braking prime mover 12, 412. The braking event for prime mover can be detected by, for example, the operator lifting an accelerator pedal, depressing a brake pedal, activating an engine braking switch, or other prime mover braking request.

In an embodiment of method 500, the operating parameter evaluated at operation 506 is a state-of-charge of energy storage system 62. Operation 508 includes controlling the at least one variable speed clutch 30, 130 to increase a speed of the at least one alternator 32, 132 to increase the state-of-charge of energy storage system 62 and to decrease the speed of the at least one alternator 32, 132 to allow the state-of-charge of energy storage system 62 to decrease. For example, one or more batteries of a battery pack of energy storage system 62 may have a state-of-charge less than a lower state-of-charge threshold, and the speed of alternator 32, 132 is increased to increase the charge on the one or more batteries. If one or more batteries of the energy storage system 62 have a state-of-charge greater than an upper state-of-charge threshold, the speed of alternator 32, 132 can be decreased, or alternator 32, 132 can be disengaged from variable speed clutch 30, 130, to allow the state-of-charge to decrease toward the upper state-of-charge threshold

In an embodiment, method 500 further includes disengaging the at least one alternator 32, 132 from output shaft 26, 426 with the at least one variable speed clutch 30, 130 in response to starting prime mover 12, 412. Disengagement of alternator 32, 132 reduces the torque output required to start prime mover 12, 412. In an embodiment, method 500 includes disengaging the at least one alternator 32, 132 from output shaft 26, 426 with the at least one variable speed clutch 30, 130 in response to shutting down prime mover 12, 412.

In an embodiment, prime mover system 10, 400 includes a plug-in hybrid configuration with a prime mover 12, 412 that is an internal combustion engine, and an electric propulsion motor, such as electric propulsion motor 66. Propulsion motor 66 is operable with electric energy from the energy storage system 62 to propel the vehicle when the internal combustion engine is not operating and/or to assist the internal combustion engine in propelling the vehicle. In this embodiment, the method 400 can include operation 406 determining an operating parameter of a desired charging speed of the energy storage system 62 while plugged-in. Operation 408 can include controlling the at least one variable speed clutch 30, 130 to increase a speed of the at least one alternator 32, 132 to increase the charging speed in response a rapid desired charging speed. In addition or alternatively, operation 408 can include disengaging the at least one alternator 32, 132 from output shaft 26, 426 with the at least one variable speed clutch 30, 130 in response to a slow desired charging speed, such as when energy storage system is plugged in for overnight or long-term charging.

In an embodiment of the plug-in hybrid configuration, prime mover system 10, 400 further includes a belt-driven heating-ventilation-air conditioning system 70. Operation 506 of method 500 includes determining the operating parameter is a plugged-in status of the plug-in hybrid and that prime mover 12, 412 is operating with heating-ventilation-air conditioning system 70. Operation 508 includes controlling the at least one variable speed clutch 30, 130 by disengaging the at least one alternator 32, 132 from output shaft 26, 426 in response to the plug-in hybrid being plugged-in and charging while the prime mover 12, 412 and heating-ventilation-air conditioning system 70 is operating.

In an embodiment of method 500, prime mover system 10, 400 includes one or more electrically powered accessories 64. Operation 508 includes controlling the at least one variable speed clutch 30, 130 to control the speed of the at least one alternator 32, 132 in response to an electrical load of the one or more electrically powered accessories 64. In an embodiment, the one or more electrically powered accessories include one or more of electric propulsion motor 66, electric axle 68, an electric heating-venting-air conditioning system 70, lights 72, air compressor 74, auxiliary power unit 76, pump 78, and electric motor 80. In an embodiment, method 400 includes determining electric heater 54 is inactive in order to generate electric power by the at least one alternator 32, 132 for use by electrically powered accessories 64.

In an embodiment of method 500, the operating parameter at operation 506 includes look-ahead route conditions. Operation 508 includes controlling the at least one variable speed clutch 30, 130 to maintain or increase the speed of the at least one alternator 32, 132 to increase a state-of-charge of the energy storage system 62 in response to the look-ahead route conditions to anticipate a greater demand for electrical energy. For example, the increase in the state-of-charge can increase the state-of-charge above a nominal threshold to provide additional electrical energy to be used to operate electric propulsion motor 66, electric axle 68, heating-venting-air conditioning system 70, and/or other accessory 64 in response to the look ahead conditions, such as a hill or other transient look-ahead condition, while minimizing the impact on the state-of-charge of energy storage system 62.

Further aspects of exemplary embodiments in accordance with the present disclosure shall now be described. One exemplary embodiment is a prime mover system includes a prime mover including an output shaft structured to output torque, at least one variable speed clutch engaged to the output shaft of the prime mover, and at least one alternator selectively engageable to the output shaft with the at least one variable speed clutch. The at least one variable speed clutch is configured to change a speed of the at least one alternator while engaged to the at least one alternator independently of a speed change of the output shaft. The system also includes an electronic control system in operative communication with the prime mover and the at least one variable speed clutch. The electronic control system is configured to control the at least one variable speed clutch to selectively engage the output shaft from the at least one alternator to vary the speed of the at least one alternator.

In an embodiment, the system includes a second variable speed clutch engaged to the output shaft of the prime mover and a second alternator selectively engageable to the output shaft with the second variable speed clutch. The second variable speed clutch is configured to change a speed of the second alternator while engaged to the second alternator without a speed change of the output shaft. The electronic control system is in operative communication with the second variable speed clutch. The electronic control system is configured to control the second variable speed clutch to selectively engage the output shaft from the second alternator to vary the speed of the second alternator.

In an embodiment, the system includes an exhaust system including an aftertreatment system and an electric heater, an energy storage system for storing electrical energy, and power electronics connecting the at least one alternator to the electric heater and the second alternator to the energy storage system.

In an embodiment of the system, the electronic control system is configured to control the at least one variable speed clutch to increase a speed of the at least one alternator to generate electrical power for the electric heater in response to a temperature of the aftertreatment system, and control the second variable speed clutch to increase or decrease the speed of the second alternator in response to a state-of-charge threshold of the energy storage system.

In an embodiment, the system includes an aftertreatment system including an electric heater, an energy storage system for storing electrical energy, and power electronics connecting the at least one alternator to at least one of the electric heater and the energy storage system. The electronic control system is configured to control the at least one variable speed clutch to increase a speed of the at least one alternator to generate electrical power for the electric heater in response to a temperature of the aftertreatment system, or control the at least one variable speed clutch to increase or decrease the speed of the second alternator in response to a state-of-charge threshold of the energy storage system.

According to an aspect of the present disclosure, a method includes operating a prime mover system including a prime mover having an output shaft, an aftertreatment system, an electric energy storage system, at least one alternator, and at least one variable speed clutch that engages the at least one alternator to the output shaft; evaluating an operating parameter of the prime mover system; and controlling the at least one variable speed clutch to vary a speed of the at least one alternator in response to the operating parameter of the prime mover system.

In an embodiment of the method, the operating parameter is a temperature condition of at least one of the prime mover and the aftertreatment system being less than a temperature threshold. Controlling the at least one variable speed clutch includes increasing the speed of the at least one alternator to increase a temperature of the at least one of the prime mover and the aftertreatment system.

In an embodiment of the method, the exhaust system includes an electric heater operable to heat an exhaust gas from the prime mover. Controlling the at least one variable speed clutch includes increasing the speed of the at least one alternator to operate the electric heater to increase the temperature of the aftertreatment system.

In an embodiment of the method, the operating parameter is a NOx output from at least one of the prime mover and the aftertreatment system being greater than a NOx threshold. Controlling the at least one variable speed clutch includes increasing the speed of the at least one alternator to decrease the NOx output from the at least one of the prime mover and the aftertreatment system.

In an embodiment of the method, the operating parameter is a regeneration event for a regeneratable aftertreatment component of the aftertreatment system. Controlling the at least one variable speed clutch includes increasing the speed of the at least one alternator for the regeneration event.

In an embodiment of the method, the operating parameter is a deceleration event for a vehicle being propelled by the prime mover. Controlling the at least one variable speed clutch includes increasing the speed of the at least one alternator to assist in deceleration of the vehicle.

In an embodiment of the method, the operating parameter is a braking event for the prime mover. Controlling the at least one variable speed clutch includes increasing the speed of the at least one alternator to assist in braking the prime mover.

In an embodiment of the method, the operating parameter is a state-of-charge of the energy storage system. Controlling the at least one variable speed clutch includes increasing a speed of the at least one alternator to increase the state-of-charge of the energy storage system and decreasing the speed of the at least alternator to allow the state-of-charge of the energy storage system to decrease.

In an embodiment of the method, the method includes disengaging the at least one alternator from the output shaft with the at least one variable speed clutch in response to starting the prime mover.

In an embodiment of the method, the method includes disengaging the at least one alternator from the output shaft with the at least one variable speed clutch in response to shutting down the prime mover.

In an embodiment of the method, the prime mover system includes a plug-in hybrid configuration with an internal combustion engine and an electric propulsion motor operable with electric energy from the energy storage system. The operating parameter is a desired charging speed of the energy storage system while plugged in. Controlling the at least one variable speed clutch includes increasing a speed of the at least one alternator to increase the charging speed in response a rapid charging speed and disengaging the at least one alternator from the output shaft with the variable speed clutch in response to a slow charging speed.

In an embodiment of the method, the prime mover system includes a plug-in hybrid configuration with an internal combustion engine and an electric propulsion motor operable with electric energy from the energy storage system, and the prime mover system further includes a heating-ventilation-air conditioning system. The operating parameter is a plugged-in status of the plug-in hybrid. Controlling the at least one variable speed clutch includes disengaging the at least one alternator from the output shaft with the variable speed clutch in response to the plug-in hybrid being plugged-in and charging.

In an embodiment of the method, the prime mover system includes one or more electrically powered accessories. Controlling the at least one variable speed clutch includes controlling the speed of the at least one alternator in response to an electrical load of the one or more electrically powered accessories.

In an embodiment of the method, the one or more electrically powered accessories include one or more of: an electric propulsion motor; an electric axle; a heating-venting-air conditioning system; lights; an air compressor; an auxiliary power unit; a pump; and an electric motor.

In an embodiment of the method, the operating parameter includes look-ahead route conditions. Controlling the at least one variable speed clutch includes maintaining or increasing the speed of the at least one alternator to increase a state-of-charge of the energy storage system in response to the look-ahead route conditions.

According to a further aspect of the disclosure, a method includes operating a prime mover system including a prime mover having an output shaft, an aftertreatment system, at least one heater for the aftertreatment system, at least one alternator, and at least one variable speed clutch that engages the at least one alternator to the output shaft; evaluating a temperature condition of at least one of the prime mover and the aftertreatment system to be less than a temperature threshold; and controlling the at least one variable speed clutch to engage the at least one alternator in response to the temperature condition to operate the electric heater to increase the temperature of the aftertreatment system.

While illustrative embodiments of the disclosure have been illustrated and described in detail in the drawings and foregoing description, the same is to be considered as illustrative and not restrictive in character, it being understood that only certain exemplary embodiments have been shown and described and that all changes and modifications that come within the spirit of the claimed inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. A prime mover system comprising:
a prime mover including an output shaft structured to output torque;
at least one variable speed clutch engaged to the output shaft of the prime mover;
at least one alternator selectively engageable to the output shaft with the at least one variable speed clutch, the at least one variable speed clutch configured to change a speed of the at least one alternator while engaged to the at least one alternator independently of a speed change of the output shaft; and
an electronic control system in operative communication with the prime mover and the at least one variable speed clutch, the electronic control system being configured to control the at least one variable speed clutch to selectively engage the output shaft from the at least one alternator to vary the speed of the at least one alternator.

2. The prime mover system of claim 1, further comprising:
a second variable speed clutch engaged to the output shaft of the prime mover;
a second alternator selectively engageable to the output shaft with the second variable speed clutch, the second variable speed clutch configured to change a speed of the second alternator while engaged to the second alternator independently of a speed change of the output shaft; and
wherein the electronic control system is in operative communication with the second variable speed clutch, the electronic control system being configured to control the second variable speed clutch to selectively engage the output shaft from the second alternator to vary the speed of the second alternator.

3. The prime mover system of claim 2, further comprising:
an exhaust system including an aftertreatment system and an electric heater;
an energy storage system for storing electrical energy; and
power electronics connecting the at least one alternator to the electric heater and the second alternator to the energy storage system.

4. The prime mover system of claim 3, wherein the electronic control system is configured to:
control the at least one variable speed clutch to increase a speed of the at least one alternator to generate electrical power for the electric heater in response to a temperature of the aftertreatment system; and
control the second variable speed clutch to increase or decrease the speed of the second alternator in response to a state-of-charge threshold of the energy storage system.

5. The prime mover system of claim 1, further comprising:
an aftertreatment system including an electric heater;
an energy storage system for storing electrical energy;
power electronics connecting the at least one alternator to at least one of the electric heater and the energy storage system; and
wherein the electronic control system is configured to:
control the at least one variable speed clutch to increase a speed of the at least one alternator to generate electrical power for the electric heater in response to a temperature of the aftertreatment system; or
control the at least one variable speed clutch to increase or decrease the speed of the second alternator in response to a state-of-charge threshold of the energy storage system.

6. A method comprising:
operating a prime mover system including a prime mover having an output shaft, an aftertreatment system, an electric energy storage system, at least one alternator, and at least one variable speed clutch that engages the at least one alternator to the output shaft;
evaluating an operating parameter of the prime mover system; and
controlling the at least one variable speed clutch to vary a speed of the at least one alternator in response to the operating parameter of the prime mover system.

7. The method of claim 6, wherein:
the operating parameter is a temperature condition of at least one of the prime mover and the aftertreatment system being less than a temperature threshold; and
controlling the at least one variable speed clutch includes increasing the speed of the at least one alternator to increase a temperature of the at least one of the prime mover and the aftertreatment system.

8. The method of claim 7, wherein:
the exhaust system includes an electric heater operable to heat an exhaust gas from the prime mover; and
controlling the at least one variable speed clutch includes increasing the speed of the at least one alternator to operate the electric heater to increase the temperature of the aftertreatment system.

9. The method of claim 6, wherein:
(a) the operating parameter is a NOx output from at least one of the prime mover and the aftertreatment system being greater than a NOx threshold; and
controlling the at least one variable speed clutch includes increasing the speed of the at least one alternator to decrease the NOx output from the at least one of the prime mover and the aftertreatment system, or
(b) the operating parameter is a regeneration event for a regeneratable aftertreatment component of the aftertreatment system; and
controlling the at least one variable speed clutch includes increasing the speed of the at least one alternator for the regeneration event, or
(c) the operating parameter is a deceleration event for a vehicle being propelled by the prime mover; and
controlling the at least one variable speed clutch includes increasing the speed of the at least one alternator to assist in deceleration of the vehicle, or
(d) the operating parameter is a braking event for the prime mover; and
controlling the at least one variable speed clutch includes increasing the speed of the at least one alternator to assist in braking the prime mover, or
(e) the operating parameter is a state-of-charge of the energy storage system; and
controlling the at least one variable speed clutch includes increasing a speed of the at least one alternator to increase the state-of-charge of the energy storage system and decreasing the speed of the at least alternator to allow the state-of-charge of the energy storage system to decrease, or
(f) the prime mover system includes a plug-in hybrid configuration with an internal combustion engine and an electric propulsion motor operable with electric energy from the energy storage system;
the operating parameter is a desired charging speed of the energy storage system while plugged in; and
controlling the at least one variable speed clutch includes increasing a speed of the at least one alternator to increase the charging speed in response a rapid charging speed and disengaging the at least one alternator from the output shaft with the variable speed clutch in response to a slow charging speed.

10. The method of claim 6, further comprising disengaging the at least one alternator from the output shaft with the at least one variable speed clutch in response to starting the prime mover and/or in response to shutting down the prime mover.

11. The method of claim 6, wherein:
the prime mover system includes a plug-in hybrid configuration with an internal combustion engine and an electric propulsion motor operable with electric energy from the energy storage system, the prime mover system further including a heating-ventilation-air conditioning system;
the operating parameter is a plugged-in status of the plug-in hybrid; and
controlling the at least one variable speed clutch includes disengaging the at least one alternator from the output shaft with the variable speed clutch in response to the plug-in hybrid being plugged-in and charging.

12. The method of claim 6, wherein:
the prime mover system includes one or more electrically powered accessories; and
controlling the at least one variable speed clutch includes controlling the speed of the at least one alternator in response to an electrical load of the one or more electrically powered accessories.

13. The method of claim 12, wherein the one or more electrically powered accessories include one or more of: an electric propulsion motor; an electric axle; a heating-venting-air conditioning system; lights; an air compressor; an auxiliary power unit; a pump; and an electric motor.

14. The method of claim 6, wherein:
the operating parameter includes look-ahead route conditions; and
controlling the at least one variable speed clutch includes maintaining or increasing the speed of the at least one alternator to increase a state-of-charge of the energy storage system in response to the look-ahead route conditions.

15. A method comprising:
operating a prime mover system including a prime mover having an output shaft, an aftertreatment system, at least one heater for the aftertreatment system, at least one alternator, and at least one variable speed clutch that engages the at least one alternator to the output shaft;
evaluating a temperature condition of at least one of the prime mover and the aftertreatment system to be less than a temperature threshold; and
controlling the at least one variable speed clutch to engage the at least one alternator in response to the temperature condition to operate the electric heater to increase the temperature of the aftertreatment system.
